# EUROPEAN PATENT APPLICATION

(11) **EP 2 332 680 A1**
(43) Date of publication of application: **15.06.2011**
(21) Application number: 09811568.6
(22) Date of filing: 04.09.2009
(51) Int. Cl.: B23C 5/20, B23C 5/08

(54) **TIP AND SIDE CUTTER**

(30) Priority: 04.09.2008 JP 2008226685
(71) Applicant: Tungaloy Corporation, Iwaki-shi, Fukushima 970-1144 (JP)
(72) Inventor: HAKAMADA Yoshiaki, Iwaki-shi Fukushima 9701144 (JP)
(74) Representative: Vossius & Partner
(86) International application number: PCT/JP2009/065469
(87) International publication number: WO 2010/027043

(57) **Abstract**

An insert (30) comprises a lower face (30a) formed in a substantially quadrangular shape, a flank (33) formed on an upper face (33c) formed in a convex curved face shape rising upward from two opposing sides (30b) of the quadrangular face, a pair of rake faces (32) rising upward from the other two opposing sides (30d) of the quadrangular face and formed in first side faces (30e) intersecting with the convex curved face, a pair of corner edges (31) formed respectively in intersecting ridgeline portions between the rake face (32) and the flank (33), and a pair of second side faces (30f) which intersect obliquely to the two opposing sides (30b) of the quadrangular face as viewed from a direction intersecting at right angles to the lower face (30a) and rise upward from the lower face (30a) to be formed to notch an intersection portion between the lower face (30a) and the upper face (30c) . When an operating corner edge (31a) and the operation rake face (32a) connecting thereto are determined, the first side face (30e) as a non-operation rake face (32b), the second side face (30f) adjacent to the operation corner edge (31a) and the lower face (30a) are restrained by seat faces of the insert seat (51).

## Description

### Technical Field

The present invention relates to an insert, particularly an insert provided with an arc-shaped cutting edge (corner edge) for cutting an arc-shaped portion in a corner portion of a cut groove, and a side cutter to which the insert is attached.

### Background Art

There is conventionally known a side cutter for mounting cutting inserts by means of cartridges arranged and fixed on a peripheral portion of a cutter body formed of a ring-shaped body. In the cutting insert formed in a quadrangular plate shape, a pair of quadrangular faces as upper and lower faces are formed as flanks, a pair of opposing side faces among side faces extending between the upper and lower faces, and cutting edges are formed in intersecting ridgeline portions between the rake faces and the upper and lower faces. An arc-shaped cutting edge connected to a peripheral cutting edge is formed in each of four corner portion ridgelines of the faces that are to be the rake faces. A curved face corresponding to the arc-shaped cutting edge is formed in each of intersecting portions between the upper and lower faces extending from the arc-shaped cutting edge and the side faces. Further, a mounting hole is formed in the pair of the quadrangular faces that are to be the upper and lower faces to penetrate through center portions thereof.

The cutting insert is removably attached to an insert seat. The cutting insert is attached to the insert seat in such a manner that the upper face is directed to a peripheral side of a cutter body to set the upper face as the flank, one of the pair of the side faces is directed forward in a cutter rotational direction as the rake face, and the cutting edge formed at the intersecting ridgeline portion between the rake face and the flank protrudes from a peripheral surface of the cutter body. The cutting edge attached to the insert seat respectively contacts corresponding seat faces of the insert seat and positioned, using the lower face opposing the flank, the side face opposing the rake face, and a flat face portion in the side face adjacent to the flank and the rake face, as faces to be restrained. The cutting insert is fixed using a screw member such as a countersunk screw having a head fitted in the mounting hole.

The cutting inserts are arranged in four lines from one end face side to the other end face side of the cutter body. The cutting inserts positioned respectively in the adjacent lines each other form peripheral edges in parallel with an axis line of the cutter body so that the cutting edge rotational trajectories around the axis line thereof overlap. In the cutting inserts respectively located in the most one end face side and the most other end face side of the cutter body, for cutting an arc-shaped portion in a corner portion of a cut groove, arc-shaped cutting edges (corner edges) having a curvature radius corresponding to the arc-shaped portion are formed in four corner portions of the side face which is to be the rake face. The cutting insert has cutting edges in four ridgeline portions in which the pair of the opposing side faces formed as the rake faces and the upper and lower faces formed as the flanks intersect. By using these cutting edges in order, one cutting insert can be used four times at the maximum (four times of corner changes). (for example, refer to PTL 1)

### Citation List

### Patent Literature

PTL 1: Japanese Utility Model Laid-Open No. S49-119871 (1974)

In a cutting insert provided with arc-shaped cutting edges (corner edges), a convex curved face portion interposed between two flat face portions composed of the upper face or the lower face and the side face extending from the arc-shaped cutting edge (corner edge) is formed in such a manner as to correspond to the arc-shaped cutting edge (corner edge). Therefore, as a curvature radius of the arc in the arc-shaped portion of the corner portion in the cut groove increases, the convex curved face portion increases corresponding to it to reduce an area of each of the flat face portions as the upper face, the lower face and the side face. In consequence, the following problems occur.
(1) The area of each of the flat face portions in the upper and lower faces and the side face of the cutting insert serving as faces to be restrained upon fixing the cutting insert to the insert seat is reduced to be small, and the fixation of the cutting insert becomes unstable or the seat face of the insert seat becomes deformed. Therefore, deterioration in cutting accuracy and deterioration in cutting edge lifetime occur.
(2) Upon increasing the area of the face to be restrained for avoiding the above problem, the cutting insert becomes large in size due to an increase in size of each of the upper and lower faces and the side face. Therefore, the number of the cutting inserts capable of being attached to the cutter body is reduced or the arrangement of the cutting inserts is restricted. This causes a reduction in the number of effective tooth and inhibits a preferable cutting edge arrangement, therefore deteriorating cutting performance of the side cutter.
(3) In relation to the above (2), since the insert seat and the cartridge become large in size as a result of becoming large in size of the cutting insert, strength of at least one of the cartridge and the cutter body is reduced. Therefore, deterioration in cutting accuracy and deterioration in lifetime of the cutter body occur.

The present invention is made for solving the foregoing problems, and an object of the present invention is to provide an insert suitable mainly for groove cutting and a side cutter provided with this insert.

### Summary of Invention

An insert according to the present invention to be removably attached to a cutter body, comprises a lower face formed in a substantially quadrangular shape, a flank formed on an upper face formed in a convex curved face shape rising upward in a thickness direction of the insert from two opposing sides of a quadrangular face which is to be the lower face, a pair of rake faces rising upward in the thickness direction from the other two opposing sides of the quadrangular face which is to be the lower face and formed in first side faces intersecting with a convex curved face which is to be the upper face, a pair of arc-shaped cutting edges formed respectively in intersecting ridgeline portions between the pair of the rake faces and the flank, and a pair of second side faces, which intersect obliquely or in parallel with the quadrangular face to the two opposing sides of the quadrangular face which is to be the lower face, and intersect with the convex curved face which is to be the upper face extending in the thickness direction, formed to notch an intersecting portion between the upper and lower faces and a part of the arc-shaped cutting edge connecting to the upper face, wherein: when the insert is mounted to an insert seat provided in the cutter body, and one of the pair of the arc-shaped cutting edges is selectively provided in a predetermined position as an operating cutting edge, the first side face opposing the rake face connecting to the one of the arc-shaped cutting edges, the second side face notching the one of the arc-shaped cutting edges, and the lower face adjacent to the one of the arc-shape cutting edges are respectively restrained to seat faces of the insert seat.

An angle between the rake face formed in the first side face and the lower face may be set as an obtuse angle.

A chip breaker groove may be formed along the arc-shaped cutting edge on the rake face formed in the first side face.

An angle between the second side face and the lower face may be set as a substantially right angle or an acute angle.

An angle between the first side face and the second side face may be set as a substantially right angle or an acute angle as viewed from a direction intersecting at right angles with the lower face. The insert may further comprise a mounting hole intersecting substantially at right angle with the lower face. An insert according to another aspect of the present invention is an insert to be removably attached to a cutter body, the insert comprising:
a lower face formed in a substantially quadrangular shape;
a flank formed as a single, substantially cylindrical face opposing the lower face;
a pair of rake faces intersecting with the flank;
a pair of arc-shaped cutting edges formed respectively in intersecting ridgeline portions between the pair of rake faces and the flank; and
a pair of side faces intersecting with the lower face and the flank.

Another aspect of the present invention is provided with a side cutter to which the insert of the present invention is attached in the cutter body, wherein: when the insert is mounted to the insert seat provided in the cutter body and one of the pair of the arc-shaped cutting edges is selectively provided in a predetermined position as the operating cutting edge, the first side face opposing the rake face connecting to the one of the arc-shaped cutting edges, the second side face notching the one of the arc-shaped cutting edges, and the lower face adjacent to the one of the arc-shape cutting edges are respectively restrained to the seat faces of the insert seat.

### Brief Description of Drawings

Fig. 1 is a perspective view showing a key part of a side cutter to which inserts are attached according to an embodiment to which the present invention is applied;
Fig. 2 is a partially exploded perspective view showing the key part of the side cutter shown in Fig. 1;
Fig. 3 is a side view including a partial cross section of the side cutter shown in Fig. 1;
Fig. 4 is a front view showing an insert according to the present embodiment;
Fig. 5 is a plan view showing the insert shown in Fig. 4;
Fig. 6 is a left side view showing the insert shown in Fig. 4;
Fig. 7 is a front view when the insert according to the present embodiment is attached to a cartridge;

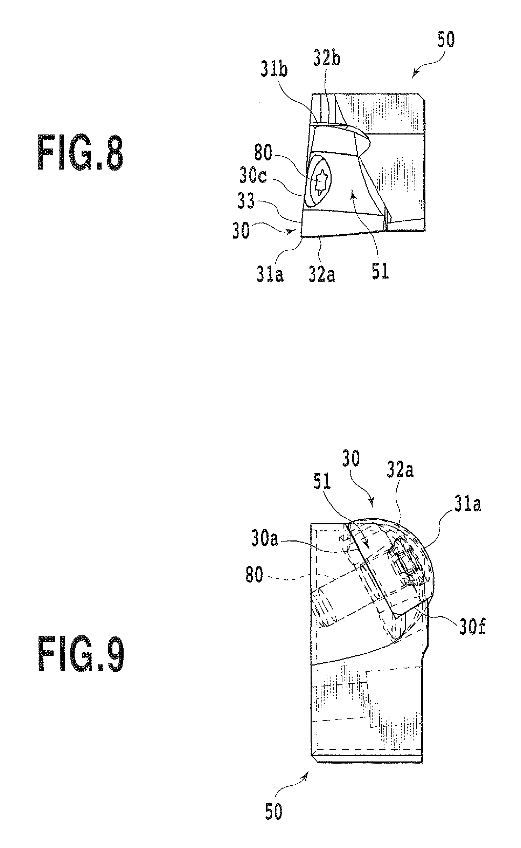

Fig. 8 is a plan view showing the insert and the cartridge shown in Fig. 7; and
Fig. 9 is a left side view showing the insert and the cartridge shown in Fig. 7.

### Description of Embodiments

An insert according to an embodiment to which the present invention is applied and a side cutter to which the insert is attached will be explained with the accompanying drawings.

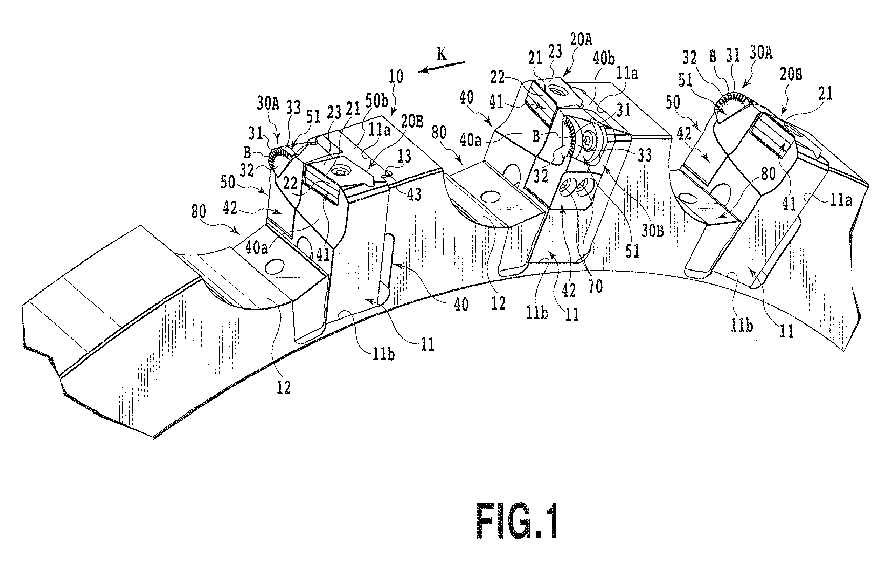

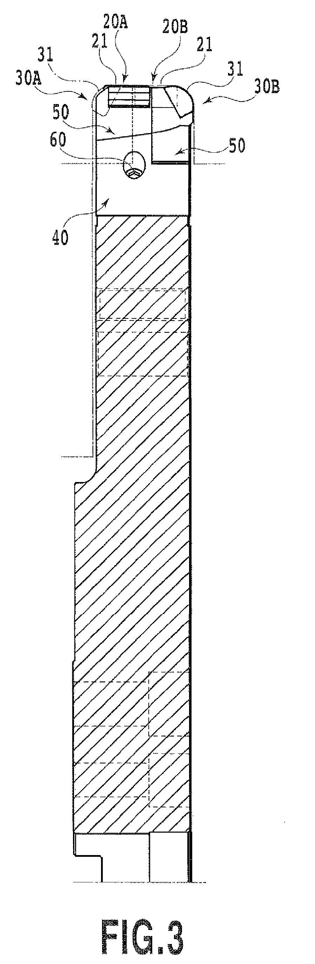

As shown in Fig. 1 to Fig. 3, the side cutter to which the insert according to the present embodiment is attached includes a substantially disc-shaped cutter body 10 having a center axis and a plurality of inserts arranged along the circumferential direction on a peripheral surface 10c thereof. The inserts include a plurality of peripheral edge inserts 20 and a plurality of corner edge inserts 30. The peripheral edge insert 20 includes a linear peripheral edge 21 protruding from the peripheral surface 10c of the cutter body 10. The corner edge insert 30 includes an arc-shaped cutting edge provided in an end portion side of the peripheral edge surface 10c of the cutter body 10, and the arc-shaped cutting edge is formed as a corner edge. The peripheral edge inserts 20 are arranged along the circumferential direction of the cutter body 10 to be positioned alternately and in a zigzag manner between one end face side and the other end face side of the cutter body 10. Likewise, the corner edge inserts 30A and 30B are arranged along the circumferential direction of the cutter body 10 to be positioned alternately and in a zigzag manner between one end face side and the other end face side of the cutter body 10.

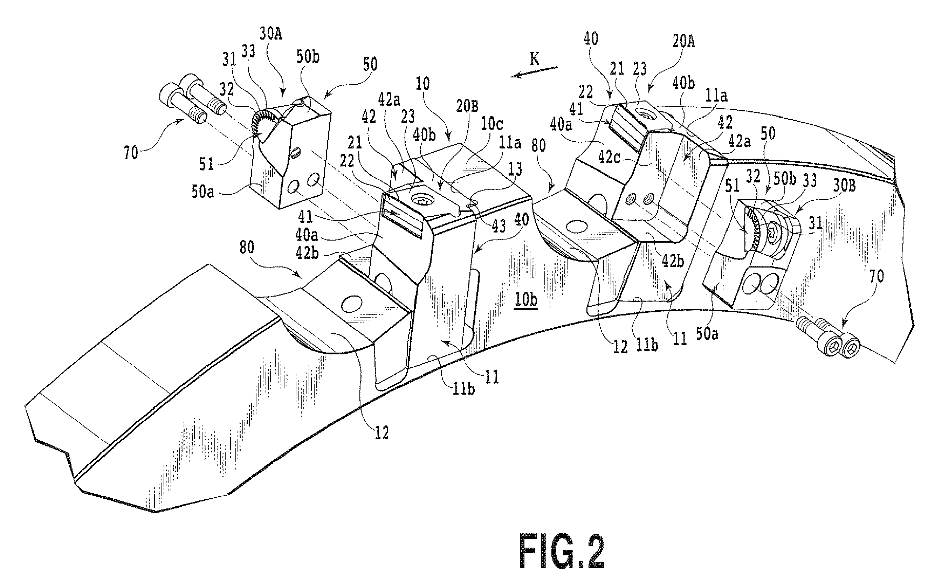

As apparent from Fig. 1 and Fig. 2, the peripheral edge insert 20 is formed in a substantial parallelogram plate shape. Parallelogram faces as upper and lower faces are formed as flanks 23, a pair of side faces extending between the upper and lower faces are respectively formed as rake faces 22, and the peripheral edge 21 is formed in an intersecting ridgeline portion between the flank 23 and the rake face 22.

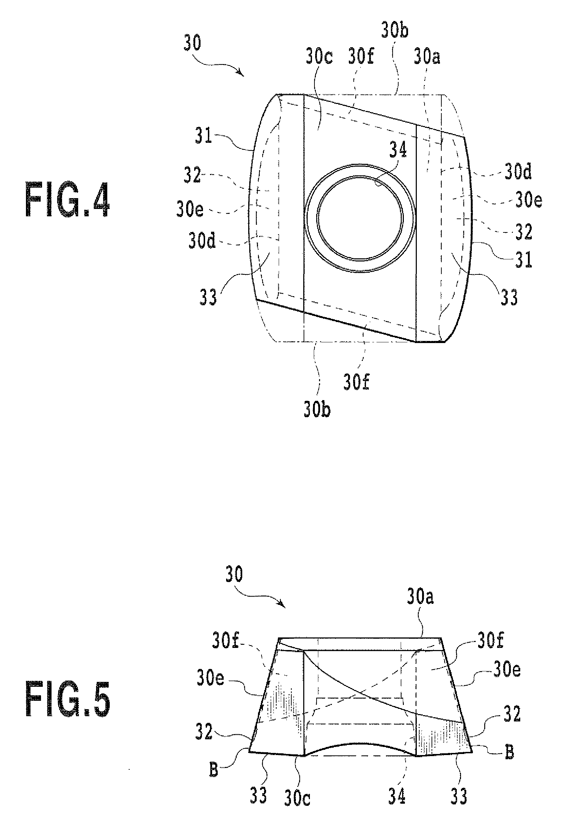

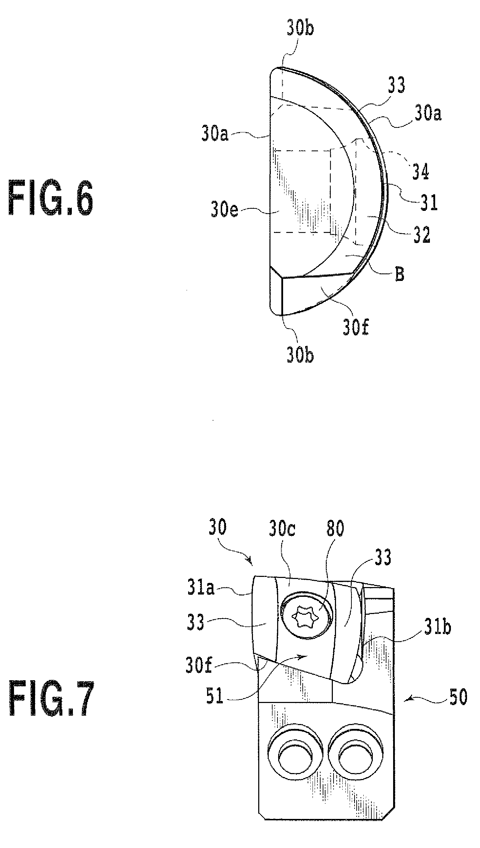

The corner edge insert 30 shown in Fig. 4 to Fig. 6 is provided with a lower face 30a, an upper face 30c, a pair of first side faces 30e, and a pair of second side faces 30f. The lower face 30a has a virtual basic configuration of a substantially rectangular shape shown in long dashed short dashed lines and dashed linesin Fig. 4. The upper face 30c is formed in a round of a convex curved face rising upward in a thickness direction of the insert 30 from two opposing sides 30b of the rectangular face of the lower face 30a. A pair of the first side faces 30e rise upward in the thickness direction from the other opposing sides 30d of the virtual rectangular face as the lower face 30a to intersect with the convex curved face as the upper face 30c. The upper face 30c is formed in a round of a substantially cylindrical face opposing the lower face 30a. Further, a pair of substantially flat, second side faces 30f are formed to notch a virtual intersecting portion between the lower face 30a and the upper face 30c of the corner edge insert 30. The second side face 30f intersects with the lower face 30a to be inclined relative to the two opposing sides 30b (two sides shown in a long dashed short dashed line in Fig. 4) of the lower face 30a as viewed from a direction intersecting at right angles with the lower face 30a, and extends in the thickness direction. Further, the lower face 30a has a substantial parallelogram shape, which imaginally can be formed by notching a substantial rectangular shape by the second side faces 30f. Though not shown, the second side faces 30f can be formed as a pair of the substantially flat faces intersecting with the lower face 30a to be substantially in parallel with the two opposing sides 30b of the lower face 30a and extending in the thickness direction, and may be formed to notch the intersecting portion between the lower face 30a and the upper face 30c. In this case, the lower face 30a notched by the second side faces 30f has a substantially rectangular shape formed by narrowing a width between the two opposing sides 30b relative to the lower face having the basic configuration formed in a substantially rectangular shape. In the corner edge insert 30, the flank is formed on the upper face 30c formed in the convex curved face, the rake faces are formed on the pair of the first side faces 30e, and the pair of the corner edges 31 are formed in the intersecting ridgeline portions between the upper face 30c and the first side faces 30e.

In the peripheral edge insert 20 and the corner edge insert 30, each of at least the peripheral edge 20 and the corner edge 30 is formed of a hard material such as cemented carbide, cermet or ceramic or an ultra-high pressure sintered compact such as polycrystal diamond or cubic boron nitride.

The peripheral edge insert 20 and the corner edge insert 30 each are mounted to the cutter body 10 by means of the first cartridge 40 and the second cartridge 50. These inserts 20 and 30 are removably fixed to the corresponding cartridges by threading screw members 80 into female screw holes formed in the cartridges by means of mounting holes 24 and 34 penetrating through centers of the upper and lower faces. The screw member 80 is preferably a countersunk screw having a head capable of being engaged on an inner wall of each of the mounting holes 24 and 34. The side cutter of the present embodiment utilizes a large-sized first cartridge 40 and a small-sized second cartridge 50. The first cartridge 40 has a width substantially equal to that of the cutter body 10. The second cartridge 50 is fixed to a recessed portion 42 formed in the side portion of the first cartridge 40.

As shown in Fig. 1, the first cartridge 40 is inserted into a recessed groove 11 opened to the peripheral surface 10c and both end surfaces 10a and 10b of the cutter body 10 and extending in the center axis direction. A wall face of the recessed groove 11 directed to the cutter rotational direction K is formed as a circumferential support face 11a. A wall face of the recessed groove 11 directed to the cutter radial outside is formed as a radial support face 11b. The circumferential support face 11a and the radial support face 11b respectively contact and support the side faces of the first cartridge 40 opposing these support faces, and therefore the first cartridge 40 is positioned in the cutter rotational direction K and in the cutter radial direction. Further, a rising engagement face 13 protruding forward in the cutter rotational direction K is formed on the circumferential support face 11a of the recessed groove 11 to extend along a direction intersecting at right angles with the center axis of the cutter body 10. A notch engagement face 43 capable of being engaged to the rising engagement face 13 is formed on the side face of the first cartridge 40 contacting with the circumferential support face 11a. The first cartridge 40 is positioned accurately in the center axis direction of the cutter body 10 by allowing the notch engagement face 43 to be engaged to the rising engagement face 13 in the circumferential support face 11a of the recessed groove 11. In addition, the first cartridge 40 is fixed by screwing a screw member 60 into a female screw hole formed in the circumferential support face of the recessed groove 11. The screw member 60 is, for example, a hexagon socket head bolt with a head fitted in the cartridge 40. The female screw hole is inclined relative to a normal line of the circumferential support face to be directed toward the cutter radial inside and the rising engagement face 13. The first cartridge 40 is pressed against the circumferential support face 11a, the radial support face 11b and the rising engagement face 13 of the recessed groove 11 to be accurately positioned and fixed. Further, the first cartridge 40 is, when a wedge member 90 located forward in the cutter rotational direction K of the cartridge 40 is fastened therein, pressed against the circumferential support face of the recessed groove 11 to be strongly fixed thereon.

The second cartridge 50 is inserted into a recessed portion 42 notched in the side face of the first cartridge 40, which side face being positioned to one end face side of the cutter body 10. A wall face of the recessed portion 42 directed to the cutter rotational direction K is formed as a circumferential support face 42a. A wall face directed to the cutter radial outside is formed as a radial support face 42b. A wall face directed to the center axis direction of the cutter body 10 is formed as an axial support face 42c. The support faces 42a, 42b and 42c respectively contact and support the side faces of the first cartridge 40 opposing these support faces, so that the first cartridge 40 is positioned therein. In addition, the second cartridge 50 is fixed by screwing two screw members 70 into female screw holes formed in the axial support face 42c of the recessed groove 42. Each of the two screw members 70 is, for example, a hexagon socket head bolt with a head fitted in the cartridge 50. The female screw hole is inclined relative to a normal line of the axial support face 42c to be directed toward the circumferential support face 42a side and the radial support face 42b side, and therefore the second cartridge 50 is pressed against all the support faces 42a, 42b and 42c to be fixed thereon.

An insert seat 41 is formed in an intersecting ridgeline portion between a side face directed in the cutter radial outside of the first cartridge 40 and a side face directed forward in the cutter rotational direction K. The peripheral edge insert 20 is screwed in the insert seat 41 by the screw member 80. That is, the peripheral edge insert 20 is mounted to the cutter body 10 by means of the first cartridge 40. On the other hand, an insert seat 51 is formed in an intersecting ridgeline portion between a side face positioned at one end face side of the cutter body 10 of the second cartridge 50 and a side face directed forward in the cutter rotational direction K. The corner edge insert 30 is screwed to the insert seat 51 by the screw member 70. That is, the corner edge insert 30 is mounted to the cutter body 10 by means of the second cartridge 50 and further by means of the first cartridge 40. In other words, the large-sized first cartridge 40 and the small-sized second cartridge 50 mounted to the first cartridge 40 have a parent-child relation to each other.

As described above, the peripheral edge inserts 20A and 20B and the corner edge inserts 30A and 30B are arranged along the circumferential direction of the cutter body 10 to be positioned alternately and in a zigzag manner between one end surface side and the other end surface side of the cutter body 10. In a case where the peripheral edge insert 20A at the one end face side is mounted in the first cartridge 40 of one side, the corner edge insert 30B at the other end face side is mounted in the second cartridge 50 mounted integrally with the first cartridge 40 of the one side. In reverse, in a case where the peripheral edge insert 20B at the other end face side is mounted in the first cartridge 40 of the other side, the corner edge insert 30A at the one end face side is mounted in the second cartridge 50 mounted integrally with the first cartridge 40 of the other side. In addition, the cartridge 40 of the one side and the cartridge 40 of the other side are alternately mounted in the cutter body 10 along the circumferential direction of the cutter body 10 in the same number respectively.

The peripheral edge insert 20 is mounted to the cutter body 10 by means of the first cartridge 40. In the mounted peripheral edge insert 20, the one rake face is directed forward in the cutter rotational direction K as an operation rake face 22a, the one flank is directed in the peripheral side of the cutter body 10 as an operation flank 23a, and the peripheral edge connecting to the operation rake face 22a protrudes as an operation peripheral edge 21a from the peripheral surface of the cutter body 10. When the peripheral edge insert 20 is mounted to the first cartridge 40, at least one side face of a non-operation rake face 22b opposing the operation rake face 22a, a non-operation flank 23b opposing the operation flank 23a, and a side face extending from the non-operation rake face 22b in the peripheral edge insert 20 are respectively restrained by seat faces of the insert seat 41 provided in the first cartridge 40.

The corner edge insert 30 is mounted to the cutter body 10 by means of the second cartridge 50. In the mounted corner edge insert 30, the one rake face is directed forward in the cutter rotational direction K as an operation rake face 32a, the flank 33 is directed in the peripheral side of the cutter body 10, and the peripheral edge connecting to the operation rake face 32a protrudes as an operation peripheral edge 31a from the peripheral surface and the end surface of the cutter body 10. When the corner edge insert 30 is mounted to the second cartridge 50, a non-operation rake face 32b opposing the operation rake face 32a, a lower face 30a formed in a substantial parallelogram and adjacent to the operation corner edge 31a, and a second side face 30f positioned in the end face side of the cutter body 10 and adjacent to the operation corner edge 31a in the corner edge insert 30 are respectively restrained to seat faces of the insert seat 51 provided in the second cartridge 50.

The peripheral edge insert 20 and the corner edge insert 30 mounted in the first cartridge 40 are, as viewed from the side of the side cutter, spaced from each other in the center axis direction of the cutter body 10 along the side face directed forward in the cutter rotational direction K of the first cartridge 40, and are arranged substantially in the same position in the circumferential direction of the cutter body 10. Further, the peripheral edge insert 20 and the corner edge insert 30 have a single chip pocket 12 in common formed adjacent thereto forward in the cutter rotational direction K. The chip pocket 12 is formed in a large size by notching the peripheral face 10c of the cutter body 10 in a recessed curved-face shape to be recessed inward and is opened also to both the end surfaces 10a and 10b of the cutter body 10. The recessed curved face is connected to a side face directed in the cutter radial outside of the wedge member 90 adjacent to the first cartridge 40 forward in the cutter rotational direction K. The event that the peripheral edge inserts and the corner edge inserts (20A and 30B, and 20B and 30A) are arranged substantially in the same position in the circumferential direction of the cutter body 10 means the event that both the inserts (20A and 30B, and 20B and 30A) are positioned in the single first cartridge 40 or the single recessed groove 11 into which the first cartridge 40 is inserted. Particularly it is preferable that at least a part of both the inserts (20A and 30B, and 20B and 30A) overlap each other in the cutter rotational direction K (refer to Fig. 1 and Fig. 2).

The side cutter described above is mounted in a main spindle of a machine tool, rotated around the center axis and fed in a direction intersecting at right angles with the center axis. A cutting edge of each of the peripheral edge insert and the corner edge insert mounted in the cutter body 10 contact a work material for cutting. The side cutter then forms a groove in the work material to have a cross sectional configuration substantially similar to a rotational trajectory when rotating the cutting edge of respective inserts 20 and 30 around the center axis.

According to the corner edge insert 30 in the present embodiment, areas of the faces to be restrained in the lower face 30a, the first side face 30e and the second side face 30f contacting with the seat faces of the insert seat 51 are large despite the curvature radius of the corner edge 31 for cutting the arc-shaped portion of the corner portion in the cut groove being large. Therefore, the corner edge insert 30 is stably fixed to the insert seat 51, and deformation of the seat face in the insert seat 51 is prevented. Further, the corner edge insert 30 can have a contour smaller than that of the conventional corner edge insert. In consequence, the corner edge insert 30A in the one end face side of the cutter body 10 and the adjacent peripheral edge insert 20B of the other end face side, and the corner edge insert 30B in the other end face side and the adjacent peripheral edge insert 20A of the one end face side can be arranged in the substantially same position in the circumferential direction of the cutter body 10 without interference with each other. Since a sufficient thickness is secured between the inserts, the strength in the cartridge, particularly around the insert seat, will not be deteriorated.

In the corner edge insert 30 thus downsized in the contour, the lower face 30a and the one first side face 30e which is to be the non-operation rake face 32b, capable of securing the broad area, serve as the faces to be restrained, and further, the second side face 30f, formed adjacent to the lower face 30a and the first side face 30e to secure a broad area, serves as the face to be restrained. Therefore, the corner edge insert 30 can be stably fixed to the first cartridge 50 or the cutter body 10. In consequence, the arc-shaped portion of the corner portion in the cut groove can be cut with high precision. Further, since the area of each of the face to be restrained of the insert 30 and the seat face of the insert seat 51 are sufficiently secured, the deformation of the seat face in the insert seat 51 can be prevented to prevent deterioration in cutting accuracy and lifetime of the side cutter.

Further, the corner edge insert 30 is restrained with the faces to be restrained adjacent and close to the operation corner edge 31a by retraining the faces to be restrained formed in the lower face 30a and the second side face 30f adjacent to the operation corner edge 31a with the seat faces of the insert seat 51. In consequence, the positioning accuracy of the operation corner edge 31a to the cutter body 10 can be enhanced. Since the second side face 30f is formed to intersect with the operation corner edge 31a at an obtuse angle as viewed from a direction intersecting at right angles with the lower face 30a, the second side face 30f, as the face to be restrained, is maximized in the height direction of the corner edge inserts 30 at the intersecting portion with the operation corner edge 31a. Therefore, since the positioning accuracy of the operation corner edge 31a is furthermore enhanced and becomes stable, the cutting accuracy of the arc-shaped portion in the corner portion of the cut groove by the side cutter is further improved.

By attaching to the cutter body 10 the corner edge inserts 30 having the contour downsized more than conventional, it is possible, as described above, to arrange the peripheral edge inserts 20 and the corner edge inserts 30 in an increased number than in the conventional side cutter. Therefore, an improvement on the cutting performance due to an increase in the number of effective tooth can be achieved. Further, since an increase in size of the second cartridge 50 to which the corner insert 30 is attached is prevented, deterioration in strength of the first cartridge 40 and the cutter body 10 can be prevented as a result.

For the corner edge insert 30, the corner edge 31 having a curvature radius corresponding to the arc-shaped portion of the corner portion in the groove to be cut is selected. Since the curvature radius of such corner edge frequently changes depending on the shape of the groove to be cut, the corner edge insert 30 must be more frequently replaced than the peripheral edge insert 20. However, removing the cutter body 10 from the main spindle of the machine tool to change the corner edge insert 30 leads to remarkable deterioration in workability. Further, since in some cases, an outer dimension of the corner edge insert 30 changes depending on a magnitude of the curvature radius of the corner edge 31, it is necessary to replace the corner edge insert 30 and the cartridge, to which the corner edge insert 30 is mounted, all together. In consideration of such circumstances, the corner edge insert 30 is independently mounted to the second cartridge 50, and the second cartridge 50 is further mounted to the cutter body 10 by means of the first cartridge 40. With this configuration, at changing the radius of the arc-shaped portion of the corner portion in the groove to be cut by the side cutter, the corner edge insert 30 can be replaced simply by removing the small-sized second cartridge 50 alone. Even in a case of replacing the corner edge insert 30 for a corner edge insert 30 having a different outer dimension, it is only required to replace the second cartridge 50 alone. That is, a replacement operation of the corner edge insert 30 can be carried out very easily and in a short time without removing the cutter body 10 from the main shaft of the machine tool or removing the large-sized first cartridge 40 from the cutter body 10, and therefore the workability of replacing the corner edge insert 30 can be largely improved. Further, the removal operation of the second cartridge 50 can be performed in a stationary state of the cutter body 10 without removing the cutter body 10 from the main spindle of the machine tool, since the screw members 70 for fixing the second cartridge 50 can be operated from the end face side of the cutter body 10. In this respect also, an improvement of the workability can be accomplished.

Width above configuration, the corner edge insert 20 suitable for the groove cutting and the side cutter to which the corner edge insert 20 is attached can be provided.

The peripheral edge insert and the corner edge insert (20A and 30B, and 20B and 30A) have the single chip pocket 12 in common formed adjacent to these inserts forward in the cutter rotational direction K. Therefore, strength and rigidity in the vicinity to the peripheral face 10c of the cutter body 10 are increased. Further, since the chip pocket 12 is formed in a large size to be opened to both the end surfaces 10a and 10b of the cutter body 10, it has a large capability of accommodating chips generated by each cutting edge of the peripheral edge insert 20 and the corner edge insert 30 and smoothly discharges them to outside.

In a case where an angle between the rake face 32 formed in the first side face 30e and the lower face 30a is set as an obtuse angle in the corner edge insert 30 according to the present embodiment (refer to Fig. 5), the rake face 32 is inclined in an increasing direction of the rake angle. Therefore, a cutting performance of the corner edge 31 can be improved without changing a mounting angle of the corner edge insert 30 in the cutter body 10. In consequence, a chatter vibration of the side cutter to which the corner edge insert 30 is attached is restricted to improve the cutting performance.

Further, in a case where the chip breaker groove B is formed on the rake face 32 of the corner edge insert 30 along the corner edge 31, the rake angle of the corner edge 31 becomes large by this chip breaker groove B to improve the cutting performance of the corner edge 31. In consequence, the chatter vibration of the side cutter to which the corner edge insert 30 is attached is restricted to improve the cutting performance.

Further, in a case where an angle between the second side face 30f and the lower face 30a in the corner edge insert 30 is set as a substantially right angle or an acute angle, a cutting resistance applied on the seat face of the insert seat 51 through the corner edge insert 30 can prevent a behavior in which the corner edge insert 30 tends to leave away from the seat face of the insert seat 51. In consequence, the corner edge insert 30 can be furthermore stably fixed to the insert seat 51.

Further, in a case where an angle between the first side face 30e and the second side face 30f is set as a substantially right angle or an acute angle as viewed from a direction intersecting at right angles to the lower face 30a of the corner edge insert 30, the cutting resistance applied on the seat face of the insert seat 51 through the corner edge insert 30 can prevent a behavior in which the corner edge insert 30 tends to rotate around the axis interjecting at right angles to the lower face 30a.

## Claims

1. An insert to be removably attached to a cutter body, comprising:
a lower face formed in a substantially quadrangular shape;
a flank formed on an upper face formed in a convex curved face shape rising upward in a thickness direction of the insert from two opposing sides of a quadrangular face which is to be the lower face;
a pair of rake faces rising upward in a thickness direction from the other two opposing sides of the quadrangular face which is to be the lower face and formed in first side faces intersecting with a convex curved face which is to be the upper face;
a pair of arc-shaped cutting edges formed respectively in intersecting ridgeline portions between the pair of the rake faces and the flank; and
a pair of second side faces, which intersect obliquely or in parallel with the quadrangular face to the two opposing sides of the quadrangular face which is to be the lower face, and
intersect with the convex curved face which is to be the upper face extending in the thickness direction, formed to notch an intersection portion between the upper and lower faces and a part of the arc-shaped cutting edge connecting to the upper face,
wherein:
when the insert is mounted to an insert seat provided in the cutter body and one of the pair of the arc-shaped cutting edges is selectively provided in a predetermined position as an operating cutting edge, the first side face opposing the rake face connecting to the one of the arc-shaped cutting edges, the second side face notching the one of the arc-shaped cutting edges, and the lower face adjacent to the one of the arc-shape cutting edges are respectively restrained to seat faces of the insert seat.

2. An insert according to claim 1, wherein an angle between the rake face formed in the first side face and the lower face is set as an obtuse angle.

3. An insert according to claim 1, wherein a chip breaker groove is formed along the arc-shaped cutting edge on the rake face formed in the first side face.

4. An insert according to claim 1, wherein an angle between the second side face and the lower face is set as a substantially right angle or an acute angle.

5. An insert according to claim 1, wherein an angle between the first side face and the second side face is set as a substantially right angle or an acute angle as viewed from a direction intersecting at right angles with the lower face.

6. An insert according to claim 1, further comprising:
a mounting hole intersecting substantially at right angle with the lower face.

7. An insert to be removably attached to a cutter body comprising:
a lower face formed in a substantially quadrangular shape;
a flank formed as a single, substantially cylindrical face opposing the lower face;
a pair of rake faces intersecting with the flank;
a pair of arc-shaped cutting edges formed respectively in intersecting ridgeline portions between the pair of rake faces and the flank; and
a pair of side faces intersecting with the lower face and the flank.

8. A side cutter to which the insert according to claim 1 is attached in the cutter body, wherein:
when the insert is mounted to the insert seat provided in the cutter body and one of the pair of the arc-shaped cutting edges is selectively provided in a predetermined position as the operating cutting edge, the first side face opposing the rake face connecting to the one of the arc-shaped catting edges, the second side face notching the one of the arc-shaped cutting edges, and the lower face adjacent to the one of the arc-shape cutting edges are respectively restrained to the seat faces of the insert seat.
